Europäisches Patentamt

European Patent Office

Office européen des brevets

(19)

(11) Veröffentlichungsnummer: **0 218 040**
**B1**

(12) **EUROPÄISCHE PATENTSCHRIFT**

(45) Veröffentlichungstag der Patentschrift:
13.12.89

(51) Int. Cl.⁴: **C08G 18/75**, C08G 18/80

(21) Anmeldenummer: 86110963.5

(22) Anmeldetag: 08.08.86

(54) **Ganz oder teilweise mit Epsilon-Caprolactam blockiertes trans-Cyclohexan-1,4-diisocyanat, dessen Herstellung und Verwendung.**

(30) Priorität: 09.10.85 DE 3536017

(43) Veröffentlichungstag der Anmeldung:
15.04.87 Patentblatt 87/16

(45) Bekanntmachung des Hinweises auf die Patenterteilung:
13.12.89 Patentblatt 89/50

(84) Benannte Vertragsstaaten:
BE CH DE FR GB IT LI NL

(56) Entgegenhaltungen:
EP-A- 0 155 222
FR-A- 2 259 885
GB-A- 2 024 233
GB-A- 2 082 193

MAKROMOLEKULARE CHEMIE, Band 185, Nr. 2,
Februar 1984, Seiten 281-295, Heidelberg, DE; LE
THI-PHAI et al.: "Systèmes réactifs polyuréthannes
bloqués, 1 - Dissociation thermique en fonction du type
d'isocyanate et du type d'agent de blocage. Etude par
DSC et IRTF" D. NAUK UZB. SSR, FIZ.-TEKH.
INST. 1966, 65-77 000

(73) Patentinhaber: HÜLS AKTIENGESELLSCHAFT,
Patentabteilung / PB 15 - Postfach 13 20,
D-4370 Marl 1(DE)

(72) Erfinder: Gras, Rainer, Dr., Im Ostholz 49a,
D-4630 Bochum(DE)
Erfinder: Wolf, Elmar, Dr., Stauffenbergstrasse 7,
D-4350 Recklinghausen(DE)

EP 0 218 040 B1

## Beschreibung

Die Erfindung betrifft ein neues blockiertes Diisocyanat, ein Verfahren zu seiner Herstellung und die Verwendung für Pulverlacke.

Alle mit Epsilon-Caprolactam blockierten aliphatischen Diisocyanate sind entweder hochviskos oder haben einen niedrigen Schmelzpunkt und kommen daher zur Herstellung von PUR-Pulvern nicht infrage.

Zur Herstellung von witterungsbeständigen Polyurethanpulverbeschichtungen haben ausschließlich die Epsilon-Caprolactam blockierten Addukte des Isophorondiisocyanats (IPDI) wirschaftliche Bedeutung erlangt. Epsilon-Caprolactam blockiertes IPDI schmilzt bei 53 - 55°C. Infolge der niedrigen Schmelztemperatur backen die aus diesem blockierten IPDI hergestellten Pulver beim Lagern zusammen. Zur Erhöhung des Schmelzpunktes wird IPDI vor der Epsilon-Caprolactam-Blockierung einer Kettenverlängerung mit einem Polyol (NCO:OH = 2:1) unterworfen. Gemäß DE-OS 21 05 777 werden als Kettenverlängerungsmittel für IPDI Polyole wie Trimethylolpropan, 2.2.4-(2.4.4)-Trimethylhexandiol und Diethylenglykol genannt; in der DE-OS 25 42 191 sind es Gemische aus di- und trifunktinellen Polyolen; in der DE-OS 31 43 060 erfolgt die Kettenverlängerung des IPDI mit aliphatischen Diaminen. Die DE-OSS 27 35 497 und 28 42 641 beschreiben reactive PUR-Pulver, die dadurch gekennzeichnet sind, daß sie als Härter ein Epsilon-Caprolactam blockiertes isocyanuratgruppenhaltiges IPDI-Addukt enthalten. Da bei den eben aufgezählten PUR-Pulvern IPDI vor der Blockierung einer Molekülvergrößerung unterworfen wurde - was eine "Vernichtung" von NCO-Gruppen bedeutet - besitzen die daraus hergestellten PUR-Pulverhärter einen relativ niedrigen NCO-Gehalt von 9 bis maximal 16 %.

Aufgabe der Erfindung war es, ein ganz oder nur partiell Caprolactam blockiertes aliphatisches oder cycloaliphatisches Diisocyanat mit hohem NCO-Gehalt aufzuzeigen, das ohne Molekülvergrößerung einen hohen Schmelzpunkt, ausreichende Lagerstabilität und Gebrauchsfähigkeit aufweist und somit die Nachteile der üblichen blockierten nichtkettenverlängerten Diisocyanate als Härter in Pulverlacken vollständig ausschaltet.

Es wurde nun gefunden, daß das ganz oder nur teilweise blockierte Diisocyanat, das durch Epsilon-Caprolactam-Blockierung von trans-Cyclohexan-1,4-diisocyanat, im Gemisch mit Polyolen bei um 10 bis 20 °C tieferen Temperaturen aushärtet, als dies z. B. bei den entsprechenden Epsilon-Caprolactam blockierten Hexamethylendiisocyanat/Polyol-Gemischen der Fall ist.

Für den Fachmann war dies ein überraschender aber sehr willkommener Effekt. Überraschend deshalb, weil man gerade das Gegenteil erwartet hätte, da ja bekanntermaßen aliphatisch gebundene NCO-Gruppen gegenüber Polyolen reaktiver als cycloaliphatisch gebundene sind. Daß für die entsprechend blockierten NCO-Gruppen die Reaktivität gegenüber Polyolen gerade umgekehrt ist, war nicht vorhersehbar.

Gegenstand der vorliegenden Erfindung ist daher ein ganz oder teilweise mit Epsilon-Caprolactam blockiertes trans-Cyclohexan-1,4-diisocyanat.

Die erfindungsgemäßen Verbindungen schmelzen je nach Gehalt an freien NCO-Gruppen von ca. 100 bis 210 °C. Ihr NCO-Gehalt in blockierter Form beträgt 15 bis 22 %, der Gehalt an freiem NCO beträgt 15,0 bis 0,1 %.

Ein weiterer Gegenstand vorliegender Erfindung ist die Herstellung der erfindungsgemäßen Verbindungen, wobei 1 Mol trans-Cyclohexan-1,4-diisocyanat mit 1 bis 2 Molen Epsilon-Caprolactam umgesetzt wird. Sie kann in Substanz oder auch in Lösung erfolgen. Wird in Substanz gearbeitet, so wird zu dem auf 120 bis 140 °C erhitzten Diisocyanat Epsilon-Caprolactam so zudosiert, daß die Temperatur des Reaktionsgemisches nicht über 170 °C steigt. Nach Beendigung der Blockierungsmittelzugabe wird das Reaktionsgemisch zur Vervollständigung der Reaktion so lange in Schmelze gehalten, bis sich alles Epsilon-Caprolactam umgesetzt hat. Der Reaktionsverlauf wird durch Bestimmung des NCO-Gehaltes im Reaktionsgemisch kontrolliert. Die Blockierung kann, wie bereits erwähnt,auch in Lösungsmitteln durchgeführt werden. Diese Verfahrensvariante wird vorteilhaft dannangewendet, wenn der Schmelzpunkt des Reaktionsproduktes über 170 °C liegt.

Als Lösungsmittel für diese Reaktion kommen natürlich nur solche infrage, die mit Isocyanaten nicht reagieren, wie z. B. Ketone wie Aceton, Methylethylketon, Methylisobutylketon, Cyclohexanon, Cyclopentanon u. a., Aromaten wie Toluol, Xylol, Nitrobenzol; cyclische Ether wie Tetrahydrofuran, Dioxan sowie aprotische Lösungsmittel wie Dimethylformamid, Dimethylacetamid, Dimethylsulfoxid usw..

Ein weiterer Gegenstand der vorliegenden Erfindung ist die Verwendung der erfindungsgemäßen Verbindungen als Härter für Zerewitinoff-aktive Wasserstoffatome aufweisende höherfunktionelle Verbindungen. In Kombination mit deratigen Zerewitinoff-aktive H-Atome aufweisenden Verbindungen bilden die Verfahrensprodukte oberhalb 120 °C., vorzugsweise 150 bis 170 °C, zu hochwertigen Kunststoffen aushärtbare Systeme. Das bedeutendste Anwendungsgebiet für die erfindungsgemäßen Verbindungen ist ihre Verwendung als Bindemittel für lichtbeständige Polyurethan-Pulverbeschichtungen.

Die hitzehärtbare, pulverförmige Masse, in der das erfindungsgemäß blockierte Diisocyanat eingesetzt wird, enthält:

a) 100 Gew.-Teile OH-gruppenhaltiger Polyester
b) 10 bis 90 Gew.-Teile blockiertes trans-Cyclohexan-1,4-diisocyanat
c) 0 bis 120 Gew.-Teile Pigmente

2

d) 0 bis 200 Gew.-Teile üblicher Füllstoff
e) 0 bis 5 Gew.-Teile Katalysator
f) 0,1 bis 5 Gew.-Teile Verlaufmittel

Der Bestandteil a) kann im Prinzip jedes mehr als 2 OH-Gruppen enthaltendes Polymer sein, das mindestens bei 70 °C schmilzt. Hierbei handelt es sich um Polyetherpolyole, Polyester-Amid-Polyole, Polyurethanpolyole, Polyesterpolyole, hydroxylierte Acrylharze usw., deren OH-Gruppen für die Vernetzung mit dem erfindungsgemäß blockierten trans-Cyclohexan-1,4-diisocyanat bestimmt sind. Besonders bevorzugt sind unter den zahlreichen Möglichkeiten für Hydroxylgruppen tragende Polymere im Rahmen der Erfindung Polyester-Polyole. Solche Polyester-Polyole müssen ein Molekulargewicht zwischen 1 000 und 10 000, vorzugsweise 1 500 bis 5 000 und eine OH-Zahl von 10 bis 300, vorzugsweise 20 bis 200 haben. Solche Polyesterpolyole werden z. B. in den DE-OSS 19 57 483, 25 42 191, 30 04 876, 31 43 060, beschrieben.

Um die Härtungsgeschwindigkeit der hitzehärtbaren Massen zu erhöhen, kann man Katalysatoren zusetzen. Als Katalysatoren verwendet man Organozinnverbindungen, wie z. B. Dibutylzinndilaurat, Zinn-(II)-octoat, Dibutylzinnmaleat usw.. Die Menge an zugesetztem Katalysator beträgt 0,1 bis 5 Gewichts-% auf 100 Gew.-T. des Hydroxylgruppen tragenden Polymeren. Die erfindungsgemäß hergestellten Überzüge zeichnen sich durch hervorragende Witterungsbeständigkeit und sehr gute Farbbeständigkeit aus. Gebräuchliche Verlaufmittel werden beispielsweise in DE-OS 33 12 028 (Seite 6, Zeile 23, Seite 7, Zeile 12) beschrieben.

Geeignete Pigmente sind z. B. TiO$_2$ und Fabrstoffe, als Füllstoffe kommen insbesondere Bariumsulfat und Kreide infrage.

A Herstellung der erfindungsgemäßen Verbindungen

Beispiel 1

Zu 166 Gew.-T. trans-Cyclohexan-1,4-diisocyanat wurden bei 120 °C 197,8 Gew.-T. Epsilon-Caprolactam portionsweise so zugegeben, daß die Temperatur des Reaktionsgemisches nicht über 140 °C stieg. Nach Beendigung der Epsilon-Caprolactam-Zugabe wurde das Reaktionsgemisch noch ca. 2 h bei 130 °C erhitzt. Das so hergestellte Reaktionsprodukt hatte einen Schmelzbereich von 123 bis 127 °C, einen Gehalt von blockiertem NCO von 19,7% und an freiem NCO von 2,8 %.

Beispiel 2

Zu 166 Gew.-T. trans-Cyclohexan-1,4-diisocyanat, gelöst in 500 Gew.-T. Xylol, wurden bei 100 °C 226 Gew.-T. Epsilon-Caprolactam zugegeben und anschließend so lange am Rückfluß erhitzt, bis der NCO-Gehalt der Reaktionslösung 0,3 % betrug. Beim Abkühlen kristallisierte das Reaktionsprodukt aus und wurde anschließend im Vakuumtrockenschrank bei 80 °C und 12 mbar 3 h getrocknet.

Das so hergestellte Reaktionsprodukt hatte einen Schmelzbereich von 210 bis 213 °C (unter Zersetzung), einen Gehalt an blockiertem NCO von 21,0 % und an freiem NCO von 0,4 %.

Beispiel 3 (Reaktionsvergleich der erfindungsgemäßen Verbindungen mit Epsilon-Caprolactam blockiertem Hexamethylendiisocyanat)

Das im Beispiel A 2 beschriebene Epsilon-Caprolactam blockierte trans-Cyclohexan-1,4-diisocyanat (a) und das Epsilon-Caprolactam blockierte Hexamethylendiisocyanat (b) wurden im Äquivalenzverhältnis mit dem in Beispiel B 1 beschriebenen Oxyester gemischt, fein gemahlen und bei 160 °C, 170 °C, 180 °C in einer Knetkammer geknetet. Es wurde der Knetwiderstand in Abhängigkeit der Zeit verfolgt. In dem Maße, wie Reaktion eintrat, stieg der Widerstand. Bei Vernetzung stieg der Knetwiderstand steil an und fiel dann sofort wieder stark ab. Das vernetzte Produkt zerbröckelte, wurde zerrieben und zeigte nur noch einen geringen Widerstand.

| Zusammensetzung des Härter/Harz-Gemisches | Vernetzung nach: bei 160 °C 170 °C 180 °C | | |
|---|---|---|---|
| a) OCN-⟨ H ⟩-NCO + 2 Epsilon-Caprolactam/ Oxyester B 1 | 29' | 16' | 9' |
| b) OCN-$(CH_2)_6$-NCO + 2 Epsilon-Caprolactam/ Oxyester B 1 | 45' | 26' | 14' |

B Polyolkomponente

Allgemeine Herstellungsvorschrift

Die Ausgangskomponenten - Terephthalsäure (TS), Dimethylterephthalat (DMT), Hexandiol-1,6 (HD), Neopentylglykol (NPG), 1,4-Dimethylolcyclohexan (DMC) und Trimethylolpropan (TMP) - werden in einen Reaktor gegeben und mit Hilfe eines Ölbades erwärmt. Nachdem die Stoffe zum größten Teil aufgeschmolzen sind, werden bei einer Temperatur von 160 °C 0,05 Gew.-% Di-n-butylzinnoxid als Katalysator zugesetzt. Die erste Methanolabspaltung tritt bei einer Temperatur von ca. 170 °C auf. Innerhalb 6 bis 8 h wird die Temperatur auf 220 bis 230 °C erhöht und innerhalb weiterer 12 bis 15 h die Reaktion zu Ende geführt. Der Polyester wird auf 200 °C abgekühlt und durch Anlegen von Vakuum (1 mm Hg (133 Pa)) innerhalb 30 bis 45 min weitgehend von flüchtigen Anteilen befreit. Während der gesamten Reaktionszeit wird das Sumpfprodukt gerührt, und ein schwacher $N_2$-Strom durch das Reaktionsgemisch geleitet. Folgende Tabelle gibt Polyesterzusammensetzungen und die ensprechenden physikalischen und chemischen Kenndaten wieder.

Oxyester

| Beisp. | Ausgangskomponenten | | | | | | chemische und physikalische Kenndaten | | | | |
|---|---|---|---|---|---|---|---|---|---|---|---|
| | TS Mol | DMT Mol | HD Mol | NPG Mol | DMC Mol | TMP Mol | OH-Zahl mg KOH/g | Säurezahl mg KOH/g | Schmelzp. °C | DTA* °C | Viskos. b. 160°C mPa·s |
| 1 | 10 | 10 | 6,25 | 10,5 | 2 | 2,9 | 55 bis 60 | 3 bis 4 | ca. 75 | ca. 50 | ~25000 |
| 2 | Polyester d. Fa. UCB-Belgien Crylcoat R 280 M | | | | | | ~50 | <10 | 100±8 | 55±8 | ~19000 |
| 3 | 12 | 12 | 8 | 10,5 | 4,5 | 2,9 | 44 bis 48 | 3 bis 4 | ca. 75 | ca. 50 | ~25000 |
| * Glasumwandlungstemperatur | | | | | | | | | | | |

C Polyurethan-Pulverlacke

Allgemeine Herstellungsvorschrift

Die gemahlenen Produkte, Vernetzer, Polyester, Verlaufmittel-Masterbatch, werden gegebenenfalls mit dem Weißpigment und gegebenenfalls Füllstoffen, in einem Kollergang innig vermischt und anschließend im Extruder bei 80 bis 110 °C homogenisiert. Nach dem Erkalten wird das Extrudat gebrochen und mit einer Stiftmühle auf eine Korngröße ≤ 100 µm gemahlen. Das so hergestellte Pulver wird mit einer elektrostatischen Pulverspritzanlage bei 60 kV auf entfettete, gegebenenfalls vorbehandelte Eisenbleche appliziert und in einem Umlufttrockenschrank bei Temperaturen zwischen 160 und 200 °C eingebrannt.

Verlaufmitel-Masterbatch

Es werden 10 Gewichtsprozent des Verlaufmittels - ein handelsübliches Copolymeres aus Butylacrylat und 2-Ethylhexylacrylat - in dem entsprechenden Polyester in der Schmelze homogenisiert und nach dem Erstarren zerkleinert.

Die Abkürzungen in den folgenden Tabellen bedeuten:
SD = Schichtdicke in µm
HK = Härte nach König in sec (DIN 53 157)
HB = Härte nach Buchholz (DIN 53 153)
ET = Tiefung nach Erichsen in mm (DIN 53 156)
GS = Gitterschnittprüfung (DIN 53 151)
GG 60 4 °) = Messung des Glanzes nach Gardner (ASTM-D 523)
Imp. rev. = Impact reverse in g m

Beispiel 1

Pigmentierter Lack

Nach dem beschriebenen Verfahren wurde der Pulverlack mit folgender Rezeptur hergestellt, appliziert und zwischen 160 °C und 200 °C eingebrannt.
449,6 Gew.-T. Polyester gemäß Beispiel B 1
100,4 Gew.-T Vernetzer gemäß Beispiel A 1
400,0 Gew.-T. Weißpigment (TiO$_2$)
50,0 Gew.-T. Verlaufmittel-Masterbatch

| Einbrenn-bedingung. Zeit/Temp. min/°C | Mechanische Kenndaten | | | | | | |
|---|---|---|---|---|---|---|---|
| | SD | HK | HB | ET | GS | Imp. rev. g m | GG 60 # |
| 6/200 | 70 bis 80 | 175 | 100 | 9,7 bis 10 | 0 | 806 | 82 |
| 8/200 | 60 bis 80 | 172 | 100 | 9,8 bis >10 | 0 | >944 | 78 |
| 10/200 | 80 bis 90 | 172 | 100 | >10 | 0 | >944 | 80 |
| 15/180 | 60 bis 80 | 170 | 100 | 9,6 bis 9,8 | 0 | >944 | 77 |
| 20/180 | 60 bis 70 | 173 | 100 | 9,9 bis 10 | 0 | >944 | 79 |
| 25/180 | 70 bis 85 | 171 | 100 | >10 | 0 | >944 | 78 |
| 20/170 | 70 bis 80 | 172 | 100 | 9,5 bis 9,8 | 0 | 691 | 79 |
| 25/170 | 60 bis 85 | 170 | 100 | 9,7 bis 10 | 0 | >944 | 77 |
| 30/160 | 70 bis 80 | 172 | 100 | 6,5 bis 6,9 | 0 | 345 | 78 |
| 35/160 | 60 bis 70 | 174 | 100 | 7,1 bis 7,5 | 0 | 462 | 77 |

Beispiel 2

Pigmentierter Lack

Nach dem beschriebenen Verfahren wurde der Pulverlack mit folgender Rezeptur hergestellt, appliziert und zwischen 160 °C und 200 °C eingebrannt.
455,4 Gew.-T. Polyester gamäß Beispiel B 2
94,6 Gew.-T. Vernetzer gemäß Beispiel A 1
400,0 Gew.-T. Weißpigment (TiO$_2$)
50,0 Gew.-T. Verlaufmittel-Masterbatch

5

| Einbrenn-bedingung. Zeit/Temp. min/°C | Mechanische Kenndaten | | | | | | |
|---|---|---|---|---|---|---|---|
| | SD | HK | HB | ET | GS | Imp. rev. g m | GG 60 # |
| 6/200 | 60 bis 70 | 179 | 100 | 9,5 bis 9,7 | 0 | >944 | 81 |
| 8/200 | 60 bis 70 | 183 | 111 | >10 | 0 | >944 | 80 |
| 10/200 | 70 bis 80 | 180 | 100 | >10 | 0 | >944 | 78 |
| 15/180 | 60 bis 80 | 184 | 100 | >10 | 0 | >944 | 77 |
| 20/180 | 60 bis 85 | 184 | 100 | >10 | 0 | >944 | 80 |
| 25/180 | 60 | 179 | 100 | >10 | 0 | >944 | 78 |
| 20/170 | 70 bis 80 | 182 | 100 | 9,1 bis 9,5 | 0 | 806 | 79 |
| 25/170 | 60 bis 75 | 185 | 100 | 9,7 bis 10 | 0 | >944 | 77 |
| 30/160 | 70 bis 80 | 180 | 100 | 6,4 bis 7,1 | 0 | 462 | 80 |
| 35/160 | 60 bis 85 | 183 | 100 | 6,8 bis 7,5 | 0 | 576 | 79 |

## Beispiel 3

### Pigmentierter Lack

Nach dem beschriebenen Verfahren wurde der Pulverlack mit folgender Rezeptur hergestellt, appliziert und zwischen 160 °C und 200 °C eingebrannt.
469,6 Gew.-T. Polyester gemäß Beispiel B 3
80,4 Gew.-T. Vernetzer gemäß Beispiel A 1
400,0 Gew.-T. Weißpigment (TiO$_2$)
50,0 Gew.-T. Verlaufmittel-Masterbatch

| Einbrenn-bedingung. Zeit/Temp. min/°C | Mechanische Kenndaten | | | | | | |
|---|---|---|---|---|---|---|---|
| | SD | HK | HB | ET | GS | Imp. rev. g m | GG 60 # |
| 6/200 | 60 bis 80 | 172 | 100 | 9,1 bis 9,4 | 0 | 806 | 80 |
| 8/200 | 70 bis 85 | 175 | 111 | 9,7 bis 10 | 0 | >944 | 77 |
| 10/200 | 60 bis 70 | 174 | 100 | >10 | 0 | >944 | 79 |
| 15/180 | 60 bis 70 | 176 | 100 | >10 | 0 | >944 | 79 |
| 20/180 | 60 bis 70 | 172 | 100 | >10 | 0 | >944 | 78 |
| 25/180 | 70 bis 80 | 173 | 100 | 9,8 bis 10 | 0 | >944 | 81 |
| 20/170 | 70 bis 80 | 174 | 100 | 8,9 bis 9,5 | 0 | 691 | 78 |
| 25/170 | 65 bis 80 | 175 | 100 | 9,7 bis 10 | 0 | >944 | 78 |
| 30/160 | 70 bis 80 | 171 | 100 | 6,2 bis 6,8 | 0 | 345 | 76 |
| 35/160 | 60 bis 75 | 173 | 100 | 7,2 bis 7,5 | 0 | 576 | 79 |

## Beispiel 4

### Pigmentierter Lack

Nach dem beschriebenen Verfahren wurde der Pulverlack mit folgender Rezeptur hergestellt, appliziert und zwischen 160 °C und 200 °C eingebrannt.
443,9 Gew.-T. Polyester gemäß Beispiel B 1
106,1 Gew.-T. Vernetzer gemäß Beispiel A 2
400,0 Gew.-T. Weißpigment (TiO$_2$)
50,0 Gew.-T. Verlaufmittel-Masterbatch

| Einbrenn-bedingung. | Mechanische Kenndaten | | | | | | |
|---|---|---|---|---|---|---|---|
| Zeit/Temp. min/°C | SD | HK | HB | ET | GS | Imp. rev. g m | GG 60 # |
| 6/200 | 80 bis 90 | 183 | 100 | >10 | 0 | >944 | 80 |
| 8/200 | 70 bis 90 | 180 | 111 | >10 | 0 | >944 | 81 |
| 10/200 | 80 bis 95 | 186 | 125 | >10 | 0 | >944 | 83 |
| 15/180 | 80 bis 90 | 182 | 125 | >10 | 0 | >944 | 83 |
| 20/180 | 80 bis 90 | 183 | 111 | >10 | 0 | >944 | 81 |
| 25/180 | 75 bis 85 | 179 | 111 | >10 | 0 | >944 | 82 |
| 20/170 | 70 bis 90 | 177 | 100 | 9,7 bis >10 | 0 | >944 | 81 |
| 25/170 | 80 bis 90 | 184 | 100 | 9,5 bis >10 | 0 | >944 | 83 |
| 30/160 | 80 bis 90 | 182 | 100 | 5,9 bis 6,5 | 0 | 230 | 81 |
| 35/160 | 90 | 189 | 111 | 6,5 bis 7,1 | 0 | 462 | 82 |

Beispiel 5

Pigmentierter Lack

Nach dem beschriebenen Verfahren wurde der Pulverlack mit folgender Rezeptur hergestellt, appliziert und zwischen 160 °C und 200 °C eingebrannt.
449,8 Gew.-T. Polyester gemäß Beispiel B 2
100,2 Gew.-T. Vernetzer gemäß Beispiel A 2
400,0 Gew.-T. Weißpigment (TiO$_2$)
50,0 Gew.-T. Verlaufmittel-Masterbatch

| Einbrenn-bedingung. | Mechanische Kenndaten | | | | | | |
|---|---|---|---|---|---|---|---|
| Zeit/Temp. min/°C | SD | HK | HB | ET | GS | Imp. rev. g m | GG 60 # |
| 6/200 | 70 bis 80 | 183 | 100 | 9,7 bis 10 | 0 | >944 | 82 |
| 8/200 | 60 bis 80 | 180 | 111 | >10 | 0 | >944 | 84 |
| 10/200 | 70 bis 85 | 181 | 111 | >10 | 0 | >944 | 83 |
| 15/180 | 60 bis 75 | 184 | 111 | 9,5 bis 9,9 | 0 | >944 | 80 |
| 20/180 | 70 bis 80 | 182 | 100 | 9,7 bis 10 | 0 | >944 | 81 |
| 25/180 | 70 bis 80 | 185 | 111 | >10 | 0 | >944 | 85 |
| 20/170 | 75 bis 85 | 179 | 100 | 9,4 bis 9,8 | 0 | 806 | 83 |
| 25/170 | 60 bis 70 | 182 | 100 | 9,2 bis >10 | 0 | >944 | 85 |
| 30/160 | 60 bis 80 | 183 | 100 | 5,7 bis 6,2 | 0 | 115 | 84 |
| 35/160 | 70 bis 85 | 180 | 111 | 6,3 bis 6,8 | 0 | 576 | 82 |

**Patentansprüche**

1. Ganz oder teilweise mit Epsilon-Caprolactam blockiertes trans-Cyclohexan-1,4-diisocyanat.

2. Verfahren zur Herstellung der blockierten Diisocyanate nach Anspruch 1, dadurch gekennzeichnet, daß in Ab- oder Anwesenheit von Lösungsmitteln 1 Mol trans-Cyclohexan-1,4-diisocyanat mit 1 bis 2 Molen Epsilon-Caprolactam umgesetzt wird.

3. Verwendung der blockierten Diisocyanate nach Anspruch 1 für Polyurethanpulver.

**Claims**

1. Trans-Cyclohexane 1,4-diisocyanate completely or partly blocked with epsilon-caprolactam.

2. Process for the preparation of the blocked diisocyanates according to claim 1, characterized in that 1 mol trans-cyclohexane 1,4-diisocyanate is reacted with 1 to 2 mol epsilon-caprolactam in the absence or presence of solvents.

3. Use of the blocked diisocyanates according to claim 1 for polyurethane powders.

**Revendications**

1. Trans-cyclohexane-1,4-diisocyanate bloqué totalement ou partiellement par de l'epsilon-caprolactam.

2. Procédé de fabrication du diisocyanate bloqué selon la revendication 1, caractérisé en ce qu'en présence ou en l'absence de solvant on fait réagir 1 mole de trans-cyclohexane-1,4-diisocyanate avec 1 à 2 moles de epsilon-caprolactam.

3. Utilisation du diisocyanate bloqué selon la revendication 1 pour de la poudre de polyuréthane.